# EUROPÄISCHE PATENTSCHRIFT

(11) **EP 1 239 707 B1**
(45) Veröffentlichungstag und Bekanntmachung des Hinweises auf die Patenterteilung: **21.03.2007**
(21) Anmeldenummer: 02002288.5
(22) Anmeldetag: 30.01.2002
(51) Int. Cl.: H05B 39/04

(54) **Elektronischer Transformator mit Regelung**
Electronic transformer with control
Transformateur électronique muni d'une régulation

(30) Priorität: 07.03.2001 DE 10110947
(43) Veröffentlichungstag der Anmeldung: 11.09.2002
(73) Patentinhaber: Patent-Treuhand-Gesellschaft für elektrische Glühlampen mbH, 81543 München (DE)
(72) Erfinder: Franck, Felix, Dr., 80333 München (DE); Muehlschlegel, Joachim, 82194 Groebenzell (DE)
(74) Vertreter: Raiser, Franz

(56) Entgegenhaltungen:
- EP-A- 0 707 436
- EP-A- 0 933 979
- EP-A- 0 989 784
- US-A- 5 864 211

## Beschreibung

### Technisches Gebiet

Die Erfindung geht aus von einem elektronischen Transformator gemäß dem Oberbegriff des Anspruchs 1. Es handelt sich dabei insbesondere um die Regelung der Ausgangsspannung elektronischer Transformatoren zu Betrieb von Halogen-Glühlampen. Derartige elektronische Transformatoren können jedoch auch zum Betrieb anderer Lichtquellen wie z. B. Leuchtdioden eingesetzt werden.

### Stand der Technik

Zum Betrieb von Lichtquellen an der Netzspannung von z.B. 230V, insbesondere von Halogen-Glühlampen mit einer nominalen Betriebsspannung von 12V sind elektronische Transformatoren sehr verbreitet. Ein elektronischer Transformator enthält einen Wechselspannungsgenerator, der eine Generatorspannung mit einer Frequenz erzeugt, die wesentlich höher ist, als die Netzfrequenz. Über geeignete Koppelelemente wird die Generatorspannung den Lichtquellen zugeführt. Ein geeignetes Koppelelement stellt ein Übertrager mit Ferritkern dar. Dieser übernimmt im wesentlichen zwei Aufgaben: Zum einen bewerkstelligt er die Spannungstransformation vom Niveau der Netzspannung auf das Niveau der nominalen Betriebsspannung der Lichtquellen. Zum anderen bewirkt der Übertrager eine Potenzialtrennung zwischen der Netzspannung und den betriebenen Lichtquellen. Da die Zuleitungen zu den Lichtquellen in vielen Fällen berührbar sind, muss die Potenzialtrennung einschlägigen Sicherheitsvorschriften genügen.

Da die Lebensdauer von Halogen-Glühlampen sehr stark von der Betriebsspannung abhängt, ist es wünschenswert, dass die Ausgangsspannung, also die Spannung, die der elektronische Transformator an die besagten Lampen liefert, geregelt ist. Zum Dimmen der betriebenen Lampen kann auch eine Regelung auf unterschiedliche Ausgangsspannungen gewünscht sein. Unterschiedliche Einflüsse können Schwankungen der Ausgangsspannung hervorrufen, welche durch eine Regelung ausgeglichen werden sollen. Dazu zählen Netzspannungsschwankungen, unterschiedliche Spannungsabfälle im elektronischen Transformator und auf den Zuleitungen zu den Lampen durch unterschiedliche Lastverhältnisse und Toleranzen der Bauteile des elektronischen Transformators.

Zur Regelung der Ausgangsspannung muss ein Regler auf den Wechselspannungsgenerator Einfluss nehmen. Der Wechselspannungsgenerator enthält meist einen Halb- oder Vollbrücken-Wechselrichter. Dieser besteht im wesentlichen aus elektronischen Schaltern, deren Ansteuersignale der Regler durch seine Stellgröße beeinflusst. Als mögliche Stellgrößen kommen vor allem folgende Größen bezüglich der Ansteuersignale für die elektronischen Schalter in Frage: Die Frequenz, die Pulsweite für die einzelnen Schalter und das Verhältnis der Pulsweiten einzelner Schalter zueinander. Der Regler kann als I, PI oder PID Regler ausgeführt sein.

Nach der Lehre der Regelungstechnik ist dem Regler eine Istgröße zuzuführen, die im vorliegenden Fall zunächst von der Ausgangsspannung dargestellt wird. Problematisch ist dabei die Bereitstellung dieser Istgröße für den Regler. Wie oben erläutert, liegt die Ausgangsspannung an einer Stelle an, die vom Regler durch ein Koppelelement getrennt ist. Es ist deshalb ein erheblicher Aufwand in Form von zusätzlichen Koppelelementen erforderlich, um für den Regler die Ausgangsspannung zugänglich zu machen.

Ein weiteres Problem besteht darin, dass der Effektivwert der Ausgangsspannung die relevante Grundlage für die Istgröße des Reglers ist. Da die Ausgangsspannung im allgemeinen keine Sinusform aufweist, muss der Effektivwert in aufwendigen Verfahren ermittelt werden.

Aus der Schrift EP 0989784 (Raiser) ist bereits ein Verfahren und eine Schaltung bekannt, die die oben angesprochenen Probleme löst. Erfinderischer Gedanke dieser Schrift ist, dass die Istgröße nicht aus der Ausgangsgröße abgeleitet wird. Vielmehr dienen andere elektrische Betriebsgrößen des elektronischen Transformators, im folgenden Ersatzgrößen genannt, als Basis für die Berechnung einer Istgröße. Bevorzugt werden die Versorgungsspannung, welche meist die gleichgerichtete Netzspannung ist, und der Ausgangsstrom des Wechselspannungsgenerators, im folgenden mit Laststrom bezeichnet, zur Berechnung der Istgröße herangezogen. Diese Ersatzgrößen sind ohne Aufwand und damit kostengünstig bereitstellbar. Der Zusammenhang zwischen den Ersatzgrößen und der Ausgangsspannung wird durch ein Systemkennfeld beschrieben.

In der oben erwähnten Schrift wird das Systemkennfeld im Speicher eines Mikrocontrollers abgelegt. Dies bedeutet bei einem kostensensitiven Produkt wie dem elektronischen Transformator einen erheblichen Aufwand.

Ein weiteres Problem das Standes der Technik aus der o. g. Schrift entsteht dadurch, dass die Versorgungsspannung des Wechselspannungsgenerators als Ersatzgröße herangezogen wird. Änderungen der Versorgungsspannung werden durch das Systemkennfeld in eine Stellgröße umgesetzt. Die Versorgungsspannung selbst ist natürlich von der Stellgröße unabhängig. Das bedeutet, dass die Umsetzung von der Versorgungsspannung zur Stellgröße keinem Regelvorgang unterliegt und deshalb sehr genau reproduzierbar ausgelegt werden muss. Dies schlägt sich in einem hohen Aufwand für die Präzision der Stellgrößengenerierung nieder.

### Darstellung der Erfindung

Es ist Aufgabe der vorliegenden Erfindung, einen Verfahren bereit zu stellen, das die Ausgangsspannung eines elektronischen Transformators regelt, dies mit einer kostengünstigen Umsetzung von Ersatzgrößen in eine Stellgröße mit Hilfe einer einfachen Realisierung eines Systemkennfelds.

Es ist weiterhin die Aufgabe der vorliegenden Erfindung, einen elektronischen Transformator bereit zu stellen, mit dem ein derartiges Verfahren durchgeführt wird.

Diese Aufgaben werden gelöst durch einen elektronischen Transformator mit den Merkmalen gemäß Anspruch 1 bzw. durch ein Verfahren gemäß Anspruch 8.

Im Gegensatz zum Stand der Technik wird das Systemkennfeld nicht durch einen digitalen Speicher repräsentiert, sondern erfindungsgemäß durch eine analoge Schaltung, die aus kostengünstigen Bauteilen besteht und im folgenden als Kennliniennetzwerk bezeichnet wird. Das Kennliniennetzwerk besteht im einfachsten Fall aus einem RC Tiefpass mit nachgeschaltetem Spitzenwertgleichrichter. Durch Variation der Bauteile des Kennliniennetzwerks wird erfindungsgemäß der funktionale Zusammenhang zwischen Ersatzgrößen und einer Istgröße, der ein Eingangssignal eines Reglers bildet, approximiert. Im einfachsten Fall besteht der RC Tiefpass aus einem Widerstand und einem Kondensator. Der RC Tiefpass ist dann ein RC Tiefpass ersten Grades. Der Spitzenwertgleichrichter besteht im einfachsten Fall aus einer Diode einem Haltekondensator und einem Entladewiderstand. Der Haltekondensator und der Entladewiderstand können in der Eingangsbeschaltung für die Istgröße des Reglers enthalten sein und somit im Kennliniennetzwerk entfallen.

Bei manchen Anwendungen, insbesondere solchen, bei denen die Stellgröße die Frequenz des Wechselrichters ist, ist es zur Approximation des Systemkennfeldes nötig, in das Kennliniennetzwerk einen RC Hochpass einzufügen. Im einfachsten Fall besteht der RC Hochpass aus einem Widerstand und einem Kondensator. Der RC Hochpass ist dann ein RC Hochpass ersten Grades.

Im Gegensatz zum Stand der Technik wird erfindungsgemäß nicht die Versorgungsspannung des Wechselspannungsgenerators als Ersatzgröße verwendet, sondern die Generatorspannung. Durch die Tiefpassfunktion des Kennliniennetzwerks wird damit die Istgröße abhängig von der Stellgröße, wodurch der Regelkreis für die Istgröße geschlossen ist. Damit schafft die vorliegende Erfindung die Voraussetzung, dafür, dass die Generierung der Stellgröße bzw. der Ansteuersignale für die Schalter des Wechselrichters nicht die Anforderungen an die Reproduzierbarkeit erfüllen muss, wie es beim Stand der Technik nötig war. Die vorliegende Erfindung ist somit besonders vorteilhaft für kostengünstige elektronische Transformatoren.

Um die Lastverhältnisse des elektronischen Transformators in die Regelung einfließen zu lassen, wird der Laststrom als Ersatzgröße eingeführt. Der Laststrom oder der Strom den der Wechselspannungsgenerator liefert, bewirkt erfindungsgemäß an einem Messwiderstand einen Spannungsabfall, der über das Kennliniennetzwerk die Istgröße reduziert. Der Messwiderstand kann auch in die Zuleitung der Versorgungsspannung zum Wechselspannungsgenerator geschaltet sein, da ein zum Laststrom proportionaler Strom auch dort fließt.

Die Generatorspannung, die als Ersatzgröße wirkt, enthält für die Generierung der Istgröße zwei wesentlich Informationen: Form und Amplitude. Die Form der Generatorspannung kann auch dem Schaltkreis entnommen werden, der die Ansteuersignale für die elektronischen Schalter des Wechselrichters erzeugt. Die Amplitude der Generatorspannung ist proportional zur Versorgungsspannung des Wechselrichters. Somit kann aus einem Ansteuersignal und der Versorgungsspannung eine Ersatzgröße bereitgestellt werden, die der Generatorspannung proportional ist. Der entsprechende Proportionalitätsfaktor kann ggf. auch negativ sein. Dies ist abhängig davon, welche Polarität für die Istgröße der eingesetzte Regler benötigt. Unter dem Begriff "proportional" wird hier und im folgenden auch der Fall verstanden, dass zusätzlich zur Multiplikation mit einem Proportionalitätsfaktor auch die Addition eines positiven oder negativen Gleichanteils oder Offsets erfolgt.

Im allgemeinen Fall enthält die Generatorspannung einen Gleichanteil. Dieser kann im Kennliniennetzwerk unerwünscht sein, da er die Potenzialverhältnisse verschiebt. Um diesen Effekt zu kompensieren kann zusätzlich zur Generatorspannung ein Ansteuersignal in das Kennliniennetzwerk eingespeist werden.

### Beschreibung der Zeichnungen

Im folgenden soll die Erfindung anhand mehrerer Ausführungsbeispiele näher erläutert werden. Es zeigen:
- Figur 1: ein Blockschaltbild eines erfindungsgemäßen elektronischen Transformators mit ausgeführtem Wechselrichter
- Figur 2: ein Ausführungsbeispiel eines erfindungsgemäßen elektronischen Transformators

Im folgenden sind Kondensatoren durch den Buchstaben C, Widerstände durch R, Dioden durch D, Versorgungsanschlüsse durch J und Schalter durch S, jeweils gefolgt von einer Zahl, bezeichnet.

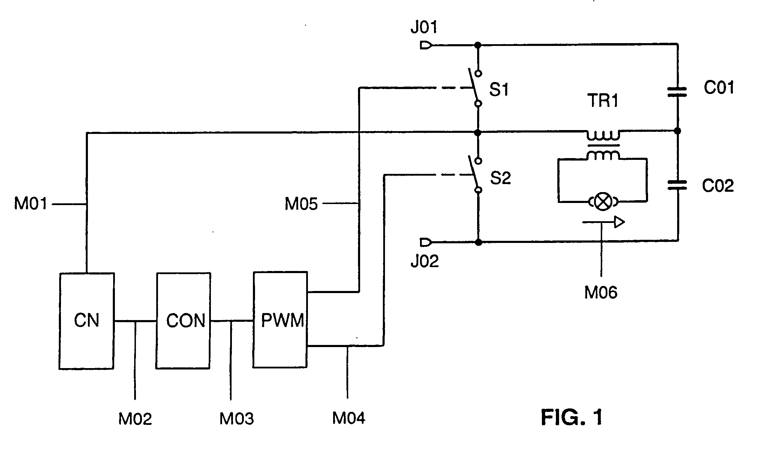

In Figur 1 ist ein elektronischer Transformator dargestellt, der erfindungsgemäß die Ausgangsspannung M06 regelt.

Über einen ersten Versorgungsanschluss J01 und einen zweiten Versorgungsanschluss J02 wird eine Versorgungsspannung einem Halbbrückenwechselrichter zugeführt. Der Halbbrückenwechselrichter besteht aus einem ersten und einem zweiten elektronischen Schalter S1 und S2, einem ersten und einem zweiten Koppelkondensator C01 und C02, sowie einem Transformator TR1. Diese Bauelemente bilden den Grundaufbau eines Halbbrückenwechselrichters. Wie dem Fachmann bekannt ist, können in der Praxis noch Hilfsbauelemente hinzugefügt werden. S1 und S2 sowie C01 und C02 bilden jeweils eine Serienschaltung und sind jeweils an die Versorgungsspannung angeschlossen. An der Verbindungsstelle von S1 und S2 steht die Generatorspannung M01 zur Verfügung. Die Primärwicklung eines Übertragers TR1 ist an die Generatorspannung M01 und an die Verbindungsstelle zwischen C01 und C02 angeschlossen. Die Kapazitätswerte von C01 und C02 sind so groß gewählt, dass sich an C01 und C02 jeweils eine Spannung einstellt, die näherungsweise der halben Versorgungsspannung entspricht. An der Sekundärwicklung des Übertragers TR1 ist eine Lampe angeschlossen, an der die Ausgangsspannung M06 abfällt. Es können auch mehrere Lampen sowohl in Serie als auch parallel an die Sekundärwicklung angeschlossen werden.

Erfindungsgemäß wird die Generatorspannung M01 in ein Kennliniennetzwerk CN eingespeist. Die Generatorspannung M01 bildet entsprechend der oben ausgeführten Darstellung der Erfindung eine Ersatzgröße für die Ausgangsspannung M06 aus der das Kennliniennetzwerk CN eine Istgröße M02 generiert. Die Istgröße M02 bildet den Eingang eines Reglers CON, der als I, PI oder PID Regler ausgeführt sein kann. Der Regler CON liefert eine Stellgröße M03 an einen Ansteuerschaltkreis PWM, der auf der Grundlage der Stellgröße M03 die Ansteuersignale M04 und M05 für die elektronischen Schalter S1 und S2 bereit stellt.

Erfindungsgemäß werden durch den in Figur 1 beschriebenen elektronischen Transformator Schwankungen der Versorgungsspannung und der Frequenz oder der Pulsweite der Generatorspannung M01 ausgeregelt und führen damit zu keiner Schwankung der Ausgangsspannung M06. Dies wird durch die vorliegende Erfindung durch ein kostengünstiges Kennliniennetzwerk CN ermöglicht, ohne die Ausgangsspannung M06 zu erfassen.

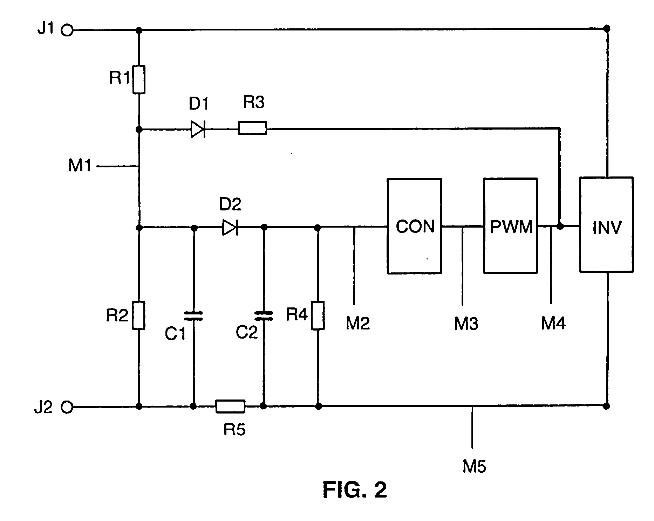

In Figur 2 ist ein Ausführungsbeispiel für einen elektronischen Transformator dargestellt, bei dem das erfindungsgemäße Kennliniennetzwerk CN näher ausgeführt ist.

Über einen ersten Versorgungsanschluss J1 und einen zweiten Versorgungsanschluss J2 wird eine Versorgungsspannung dem elektronischen Transformator zugeführt. Der erste Versorgungsanschluss ist direkt mir einem Wechselrichter INV verbunden. Im Wechselrichter INV der Figur 2 sei eine Lampe als Last mit enthalten. Der zweite Versorgungsanschluss J2 ist über einen Messwiderstand R5 mit dem Wechselrichter INV verbunden. Zwischen R5 und dem Wechselrichter INV bildet sich das Bezugspotenzial M5 aus.

Ansteuersignale M4 werden dem Wechselrichter INV für im Wechselrichter INV enthaltene elektronische Schalter zugeführt. Ein Ansteuerschaltkreis PWM erzeugt diese Ansteuersignale M4. Gesteuert wird der Ansteuerschaltkreis PWM von einem Regler CON über eine Steuergröße M3.

Zwei in Serie geschaltete Widerstände R1 und R2 sind mit den Versorgungsanschlüssen J1 und J2 verbunden, wobei R1 am Versorgungsanschluss J1 anliegt. Die Verbindungsstelle M1 der Widerstände R1 und R2 ist über die Serienschaltung einer Diode D1 und eines Widerstands R3 mit einem der Ansteuersignale M4 verbunden, wobei die Anode von D1 in Richtung der Verbindungsstelle M1 zeigt. Dadurch wirkt an der Verbindungsstelle M1 eine erste Ersatzgröße, die proportional zum Generatorsignal ist und deren Amplitude proportional zur Versorgungsspannung ist. Durch diese Anordnung kann eine erste Ersatzgröße generiert werden, die invers zu einem Ansteuersignal M4 ist.

Parallel zu R2 liegt ein Kondensator C1. Damit wird mit R1, R2 und C1 ein Tiefpass ersten Grades aufgebaut, der die erste Ersatzgröße filtert. An der Verbindungsstelle M1 liegt somit bezogen auf den Versorgungsanschluss J2 die, durch einen Tiefpass ersten Grades gefilterte, erste Ersatzgröße an. Diese wird einem Spitzenwertgleichrichter, bestehend aus einer Diode D2 und der Parallelschaltung eines Entladewiderstands R4 und eines Haltekondensators C2, zugeführt. Die Anode von D2 ist mit der Verbindungsstelle M1 verbunden. D2 ist mit der Parallelschaltung von R4 und C2 in Serie geschaltet. An der Verbindungsstelle von D2 und der Parallelschaltung von R4 und C2 bildet sich die Istgröße M2 aus, die dem Regler CON zugeführt wird. R4 und C2 sind mit dem Bezugspotenzial M5 verbunden.

Der Strom, der vom Wechselrichter INV zum Versorgungsanschluss J2 fließt, erzeugt an R5 einen Spannungsabfall, der das Potenzial an der Verbindungsstelle M1 gegenüber dem Bezugspotenzial M5 reduziert und damit auch den Istwert M2 reduziert. Damit bildet der Strom durch den Wechselrichter INV erfindungsgemäß eine zweite Ersatzgröße für die Bereitstellung einer Istgröße über das Kennliniennetzwerk bestehend aus den Bauelementen R1, R2, C1, D2, C2, R4. Die Bauelemente des Kennliniennetzwerks sind erfindungsgemäß so dimensioniert, dass die Istgröße M2 ein Maß für die Ausgangsspannung an den betriebenen Lampen ist.

## Patentansprüche

1. Elektronischer Transformator zum Betrieb von Lichtquellen, der folgende Baugruppen enthält:
- einen Wechselspannungsgenerator, der eine Generatorspannung (M01) abgibt,
- einen Regler (CON) mit einem Eingang für eine Istgröße (M2, M02) zur Regelung einer Ausgangsspannung (M06) des elektronischen Transformators,
**gekennzeichnet durch**
ein Kennliniennetzwerk (CN) mit einem Eingang zum Einspeißen von Ersatzgrößen und einem Ausgang zum Bereitstellen der Istgröße (M2, M02),
wobei der Eingang des Kennliniennetzwerks (CN) mit der Generatorspannung (M01) oder einer dazu proportionalen Spannung gekoppelt ist und der Ausgang des Kennliniennetzwerks (CN) mit dem Eingang des Reglers (CON) gekoppelt ist,
wobei das Kennliniennetzwerk (CN) die Serienschaltung aus einem Tiefpass (R 1, R2, C1) und einem Spitzenwertgleichrichter (D2, C2, R4) umfasst,
wobei der Tiefpass (R1, R2, C1) mit dem Eingang des Kennliniennetzwerks (CN) und der Spitzenwertgleichrichter (D2, C2, R4) mit Ausgang des Kennliniennetzwerks (CN) gekoppelt ist.

2. Elektronischer Transformator gemäß Anspruch 1, **dadurch gekennzeichnet, dass** der Wechselspannungsgenerator zwei in Serie geschaltete elektronische Schalter (S1, S2) enthält, wobei die Generatorspannung (M01) an der Verbindungsstelle der beiden elektronischen Schalter (S1, S2) entnommen wird.

3. Elektronischer Transformator gemäß Anspruch 1, **dadurch gekennzeichnet, dass** als Stellgröße (M3, M03) zur Regelung der Ausgangsspannung des elektronischen Transformators die Frequenz und/oder die Pulsweite der Generatorspannung (M01) verwendet wird.

4. Elektronischer Transformator gemäß Anspruch 1, **dadurch gekennzeichnet, dass** der Tiefpass (R1, R2, C1) ein RC-Tiefpass (R1, R2, C1) ist, der aus mindestens einem Widerstand (R1, R2, R4, R5) und einem Kondensator (C1, C2) besteht.

5. Elektronischer Transformator gemäß Anspruch 1, **dadurch gekennzeichnet, dass** das Kennliniennetzwerk (CN) einen RC-Hochpass mindestens ersten Grades enthält, der dem Tiefpass (R1, R2, C1) vor oder nachgeschaltet ist.

6. Elektronischer Transformator gemäß Anspruch 1, **dadurch gekennzeichnet, dass** der Strom den der Wechselspannungsgenerator liefert, an einem Messwiderstand (R5) einen Spannungsabfall bewirkt, der die Istgröße reduziert.

7. Elektronischer Transformator gemäß Anspruch 1, **dadurch gekennzeichnet, dass** der Eingang des Kennliniennetzwerks (CN) mit einem Ansteuersignal (M4, M04, M05) eines elektronischen Schalters (S1, S2) des im Wechselspannungsgenerator enthaltenen Wechselrichters gekoppelt ist.

8. Verfahren zum Regeln der Ausgangsspannung eines elektronischen Transformators zum Betrieb von Lichtquellen mit folgenden Merkmalen:
- ein im elektronischen Transformator enthaltener Wechselspannungsgenerator liefert eine Generatorspannung (M01),
- die Generatorspannung (M01) oder eine dazu proportionale Spannung wird einem Eingang eines Kennliniennetzwerks (CN) zugeführt und bildet eine Ersatzgröße,
- im Kennliniennetzwerk wird die Ersatzgröße durch einen Tiefpass (R1, R2, C1) verarbeitet,
- das durch den Tiefpass (R1, R2, C1) verarbeitete Signal wird einem Spitzenwertgleichrichter (D2, C2, R4) zugeführt,
- das durch den Spitzenwertgleichrichter (D2, C2, R4) verarbeitete Signal wird an einem Ausgang des Kennliniennetzwerks (CN) als Istgröße (M2, M02) einem Regler (CON) zugeführt, der die Ausgangsspannung (M06) des elektronischen Transformators regelt.

9. Verfahren zum Regeln der Ausgangsspannung (M06) eines elektronischen Transformators zum Betrieb von Lichtquellen gemäß Anspruch 8, **dadurch gekennzeichnet, dass** dem Kennliniennetzwerk (CN) ein Messsignal zugeführt wird, dass dem Strom den der Wechselspannungsgenerator liefert proportional ist, wodurch bei steigendem Messsignal die Istgröße (M2, M02) reduziert wird.

10. Verfahren zum Regeln der Ausgangsspannung (M06) eines elektronischen Transformators zum Betrieb von Lichtquellen gemäß Anspruch 8, **dadurch gekennzeichnet, dass** im Kennliniennetzwerk (CN) eine Ersatzgröße vor oder nach der Verarbeitung durch einen Tiefpass (R1, R2, C1) durch einen Hochpass verarbeitet wird.

## Claims

1. Electronic transformer for operating light sources, which comprises the following modules:
- an AC voltage generator, which outputs a generator voltage (M01),
- a controller (CON) having an input for an actual variable (M2, M02) for controlling an output voltage (M06) of the electronic transformer,
**characterized by** a characteristic network (CN) having an input for feeding in replacement variables and an output for providing the actual variable (M2, M02), the input of the characteristic network (CN) being coupled to the generator voltage (M01) or a voltage which is proportional thereto, and the output of the characteristic network (CN) being coupled to the input of the controller (CON), the characteristic network (CN) comprising the series circuit comprising a low-pass filter (R1, R2, C1) and a peak value detector (D2, C2 R4), the low-pass filter (R1, R2, C1) being coupled to the input of the characteristic network (CN) and the peak value detector (D2, C2, R4) being coupled to the output of the characteristic network (CN).

2. Electronic transformer according to Claim 1, **characterized in that** the AC voltage generator contains two series-connected electronic switches (S1, S2), the generator voltage (M01) being drawn at the connection point between the two electronic switches (S1, S2).

3. Electronic transformer according to Claim 1, **characterized in that** the frequency and/or the pulse width of the generator voltage (M01) is used as the manipulated variable (M3, M03) for regulating the output voltage of the electronic transformer.

4. Electronic transformer according to Claim 1, **characterized in that** the low-pass filter (R1, R2, C1) is an RC low-pass filter (R1, R2, C1), which comprises at least one resistor (R1, R2, R4, R5) and a capacitor (C1, C2).

5. Electronic transformer according to Claim 1, **characterized in that** the characteristic network (CN) contains an at least first-order RC high-pass filter, which is connected upstream or downstream of the low-pass filter (R1, R2, C1).

6. Electronic transformer according to Claim 1, **characterized in that** the current produced by the AC voltage generator brings about a voltage drop across a measuring resistor (R5), and this voltage drop reduces the actual variable.

7. Electronic transformer according to Claim 1, **characterized in that** the input of the characteristic network (CN) is coupled to a drive signal (M4, M04, M05) of an electronic switch (S1, S2) of the inverter contained in the AC voltage generator.

8. Method for controlling the output voltage of an electronic transformer for operating light sources having the following features:
- an AC voltage generator contained in the electronic transformer produces a generator voltage (M01),
- the generator voltage (M01) or a voltage which is proportional thereto is supplied to an input of a characteristic network (CN) and forms a replacement variable,
- in the characteristic network, the replacement variable is processed by a low-pass filter (R1, R2, C1),
- the signal processed by the low-pass filter (R1, R2, C1) is supplied to a peak value detector (D2, C2, R4),
- the signal processed by the peak value detector (D2, C2, R4) is supplied to a controller (CON) as the actual variable (M2, M02) at an output of the characteristic network (CN), which controller controls the output voltage (M06) of the electronic transformer.

9. Method for controlling the output voltage (M06) of an electronic transformer for operating light sources according to Claim 8, **characterized in that** a measurement signal which is proportional to the current produced by the AC voltage generator is supplied to the characteristic network (CN), as a result of which the actual variable (M2, M02) is reduced as the measurement signal rises.

10. Method for controlling the output voltage (M06) of an electronic transformer for operating light sources according to Claim 8, **characterized in that**, in the characteristic network (CN), a replacement variable is processed by a high-pass filter prior to or after the processing by a low-pass filter (R1, R2, C1).

## Revendications

1. Transformateur électronique pour faire fonctionner des sources lumineuses, comprenant les modules suivants :
- un générateur de tension alternative, qui délivre une tension de générateur (M01),
- un régulateur (CON), ayant une entrée pour une grandeur réelle (M2, M02), pour la régulation d'une tension de sortie (M06) du transformateur électronique,
**caractérisé par**
un réseau de lignes caractéristiques (CN), ayant une entrée pour l'alimentation en grandeurs de remplacement, et ayant une sortie pour la fourniture de la grandeur réelle (M2, M02),
l'entrée du réseau de lignes caractéristiques (CN) étant couplée à la tension de générateur (M01) ou à une tension qui lui est proportionnelle, et la sortie du réseau de lignes caractéristiques (CN) étant couplée à l'entrée du régulateur (CON),
le réseau de lignes caractéristiques (CN) comprenant le montage en série composé d'un filtre passe-bas (R1, R2, C1) et d'un redresseur de valeurs de pointe (D2, C2, R4), le filtre passe-bas (R1, R2, C1) étant couplé à l'entrée du réseau de lignes caractéristiques (CN), et le redresseur de valeurs de pointe (D2, C2, R4) étant couplé à la sortie du réseau de lignes caractéristiques (CN).

2. Transformateur électronique selon la revendication 1, **caractérisé en ce que** le générateur de tension alternative comprend deux commutateurs électroniques (S1, S2) montés en série, la tension de générateur (M01) étant prélevée sur le point de connexion des deux commutateurs électroniques (S1, S2).

3. Transformateur électronique selon la revendication 1, **caractérisé en ce que** la fréquence et/ou la largeur d'impulsions de la tension de générateur (M01) est utilisée comme grandeur de réglage (M3, M03) pour la régulation de la tension de sortie du transformateur électronique.

4. Transformateur électronique selon la revendication 1, **caractérisé en ce que** le filtre passe-bas (R1, R2, C1) est un filtre passe-bas RC (R1, R2, C1) qui se compose d'au moins une résistance (R1, R2, R4, R5) et d'un condensateur (C1, C2).

5. Transformateur électronique selon la revendication 1, **caractérisé en ce que** le réseau de lignes caractéristiques (CN) comprend un filtre passe-haut RC au moins de premier degré, qui est monté en amont ou en aval du filtre passe-bas (R1, R2, RC).

6. Transformateur électronique selon la revendication 1, **caractérisé en ce que** le courant que fournit le générateur de tension alternative provoque, au niveau d'une résistance de mesure (R5), une chute de tension qui réduit la grandeur réelle.

7. Transformateur électronique selon la revendication 1, **caractérisé en ce que** l'entrée du réseau de lignes caractéristiques (CN) est couplé à un signal de pilotage (M4, M04, M05) d'un commutateur électronique (S1, S2) de l'onduleur contenu dans le générateur de tension alternative.

8. Procédé de régulation de la tension de sortie d'un transformateur électronique pour faire fonctionnner des sources lumineuses, ayant les caractéristiques suivantes :
- un générateur de tension alternative contenu dans le transformateur électronique fournit une tension de générateur (M01),
- la tension de générateur (M01) ou une tension qui lui est proportionnelle est appliquée à une entrée d'un réseau de lignes caractéristiques (CN), et forme une grandeur de remplacement,
- dans le réseau de lignes caractéristiques, la grandeur de remplacement est traitée par un filtre passe-bas (R1, R2, C1),
- le signal traité par le filtre passe-bas (R1, R2, C1) est conduit à un redresseur de valeurs de pointe (D2, C2, R4),
- le signal traité par le redresseur de valeurs de pointe (D2, C2, R4) est, sur une sortie du réseau de lignes caractéristiques (CN), conduit, en tant que grandeur réelle (M2, M02), à un régulateur (CON) qui règle la tension de sortie (M06) du transformateur électronique.

9. Procédé de régulation de la tension de sortie (M06) d'un transformateur électronique pour faire fonctionner des sources lumineuses selon la revendication 8, **caractérisé en ce que**, au réseau de lignes caractéristiques (CN), est conduit un signal de mesure qui est proportionnel au courant que fournit le générateur de tension alternative, avec pour effet que la grandeur réelle (M2, M02) est réduite quand le signal de mesure augmente.

10. Procédé de régulation de la tension de sortie (M06) d'un transformateur électronique pour faire fonctionner des sources lumineuses selon la revendication 8, **caractérisé en ce que**, dans le réseau de lignes caractéristiques (CN), une grandeur de remplacement est traitée par un filtre passe-haut avant ou après le traitement filtre passe-bas (R1, R2, C1).
